# EUROPÄISCHE PATENTANMELDUNG

(11) **EP 3 358 555 A1**
(43) Veröffentlichungstag der Anmeldung: **08.08.2018**
(21) Anmeldenummer: 17160545.4
(22) Anmeldetag: 13.03.2017
(51) Int. Cl.: G09B 21/00, G06F 3/041

(54) **VORRICHTUNG ZUR TAKTILEN ANZEIGE VON BILDINFORMATIONEN**

(30) Priorität: 02.02.2017 EP 17154297
(71) Anmelder: Technische Hochschule Mittelhessen, 35390 Giessen (DE)
(72) Erfinder: Groß, Volker, 35435 Wettenberg (DE); Mursina, Ljudmila, 35398 Gießen (DE); Sohrabi, Keywan, 35394 Gießen (DE)
(74) Vertreter: Stumpf, Peter

(57) **Zusammenfassung**

Die Erfindung betrifft eine taktile Vorrichtung 1 zur Darstellung von Bildinformationen. Diese umfasst wenigstens ein Interface 30, einen Interpreter 20, einen Polarisierer 10 und ein haptisch erfassbares Ausgabemittel 40. Dabei ist das Interface 30 so ausgebildet, dass ein Austausch von Bildinformationen mit einer elektronischen Datenverarbeitungseinheit 100 ermöglicht und diese an den Interpreter 20 weiterleiten kann. Weiterhin ist der Interpreter 20 so ausgebildet er die Bildinformationen des Interfaces 30 in ein Steuersignal zur Steuerung des Polarisierer 10 umwandeln kann. Der Polarisierer 10, ist dabei so ausgebildet, dass er zur Polarisierung einer polarisierbaren Flüssigkeit in einem haptisch erfassbaren Ausgabemittel 40 geeignet ist.

Dabei umfasst das haptisch erfassbares Ausgabemittel 40 eine polarisierbare Flüssigkeit und ist angeordnet ist, dass die polarisierbare Flüssigkeit durch den Polarisierer 10 in seiner Polarisierung beeinflusst werden kann, wobei in Abhängigkeit vom Grad der Polarisierung unterschiedlich hohe Erhebungen an der Oberfläche des haptisch erfassbares Ausgabemittel 40 bestehen, welche von einem Benutzer ertastet werden können.

## Beschreibung

Die Erfindung betrifft eine Vorrichtung zur taktilen Anzeige von Bildinformationen, zum Beispiel ein Braille-Modul und vorzugsweise eine Braille-Zeile zur Darstellung taktiler Informationen, zum Beispiel für sehbehinderte oder blinde Personen.

### Stand der Technik

Displays mit taktilen Elementen (z. B. Braille-Zeilen), mit welchen sehbehinderte oder blinde Personen die Informationsinhalte von elektronischen Medien, wie zum Beispiel Bildschirmen, auslesen können, sind seit langem bekannt. Die Braillezeile dient als Schnittstelle zwischen blindem Benutzer und Bildschirminhalt. Die Informationen des Bildschirms werden in der Blindenpunktschrift, Brailleschrift, ausgegeben. Mit den Fingerkuppen ertastet der Anwender höhenveränderbare Stifte, die Braillepunkte. Der Vorteil der Brailleausgabe gegenüber einer Sprachausgabe ist die höhere Genauigkeit. Buchstaben- und Zahlenkombinationen oder Tabellen lassen sich in Punktschrift besser wiedergeben und verarbeiten. Aufgrund der hohen Lesesicherheit wird die Blindenschrift an Arbeitsplätzen oft als Hauptausgabemedium eingesetzt.

Taktile Displays bestehen in der Regel aus einem Gehäuse, einer Vielzahl von meist in Reihe nebeneinander angeordneten Braille-Modulen auf der Gehäuse-Oberfläche und mehreren Tasten oder Schaltern, die als Eingabeelemente verwendet werden können.

Die Schrift EP 0 281 746 B1 zeigt zum Beispiel einen prinzipiellen Aufbau einer elektromechanischen Braille-Zeile. EP 0 967 587 B1 offenbart eine Braille-Zeile mit einem oder mehreren Eingabeelementen. Das US-Patent US 4,473,356 beschreibt eine Braillezelle mit vibrierenden Stiften.

Zur Verwendung an Stationsrechner sowie am Notebook kommen üblicherweise Braillezeilen und Screenreader-Software zum Einsatz. Als mobile Lösung werden einfache und statische Braille-Phones verwendet. Die zurzeit eingesetzten Verfahren und Geräte bieten nur eingeschränkte Nutzungsmöglichkeiten. Beispielsweise können Blinde und Sehbehinderte am Bankautomaten nur die akustische Navigierung nutzen. Datenrechtlich ist es allerdings sehr fraglich, da die Daten (aktueller Kontostand, abgehobener Betrag etc.) des Kontoinhabers akustisch ausgegeben werden. Die Braille-Zeilen sind periphere Geräte, die zusätzlich zu den Endgeräten transportiert werden müssen. Oft kommen Braille-Zeilen auf Grund von Gewicht und Größe nur stationär zum Einsatz. Es gibt zwar mobile Braille-Zeilen jedoch werden diese auf Grund der mangelnden Handlichkeit nicht gern eingesetzt.

### Aufgabe

Aufgabe der vorliegenden Erfindung ist es eine einfach bedienbare, kompakte und zuverlässige Vorrichtung bereitzustellen zur taktilen Anzeige von Bildinformationen insbesondere in Form von Braillezeichen ohne die Zuhilfenahme eines zusätzlichen Brailleschriftgenerators.

### Lösung der Aufgabe

Diese Aufgabe wird erfindungsgemäß gelöst durch eine Vorrichtung zur taktilen Anzeige von Bildinformationen1. Diese umfasst wenigstens je ein Interface 30, einen Interpreter 20, einen Polarisierer 10 und ein haptisch erfassbares Ausgabemittel 40. Dabei ist das Interface 30 so ausgebildet, dass ein Austausch von Bildinformationen mit einer elektronischen Datenverarbeitungseinheit 100 ermöglicht und diese an den Interpreter 20 weiterleiten kann. Weiterhin ist der Interpreter 20 so ausgebildet, dass er die Bildinformationen des Interfaces 30 in ein Steuersignal zur Steuerung des Polarisierers 10 umwandeln kann. Der Polarisierer 10, ist dabei so ausgebildet, dass er zur Polarisierung einer polarisierbaren Flüssigkeit in einem haptisch erfassbaren Ausgabemittel 40 geeignet ist.

Dabei umfasst das haptisch erfassbare Ausgabemittel 40 eine polarisierbare Flüssigkeit und ist so angeordnet, dass die polarisierbare Flüssigkeit durch den Polarisierer 10 in ihrer Polarisierung beeinflusst werden kann, wobei in Abhängigkeit vom Grad der Polarisierung unterschiedlich hohe Erhebungen an der Oberfläche des haptisch erfassbaren Ausgabemittel 40 bestehen, welche von einem Benutzer ertastet werden können.

Das Interface 30 dient dazu, dass Daten zwischen einer elektronischen Datenverarbeitungseinheit (z.B. einem PC, Smartphone, Tablet, Notebook) und dem taktiles Anzeigeelement 1 ausgetauscht werden. Bei diesen Daten handelt es sich insbesondere um Bilddaten. Das Interface 30 kann dabei direkt mit einer Grafikschnittstelle (z. B. einem VGA-Port) der elektronischen Datenverarbeitungseinheit verbunden sein. Die Verbindung kann aber auch drahtlos (z.B. über W-LAN) erfolgen Dabei ist es möglich, dass die Übertragung der Bildinformationen synchron zur Darstellung auf einem Display erfolgt. Es kann dabei in Form eines Interface-Modules ausgebildet sein.

Der Interpreter 20 übersetzt die Bildinformationen d.h. Daten zur optischen Darstellung in ein Steuersignal zur haptischen Erfassung. So können beispielsweise Grauwerte in Höhenwerte oder Buchstaben in Braillezeichen übertragen werden. Es kann dabei in Form eines Interpreter-Modules ausgebildet sein.

Der Polarisierer 10 ist die Komponente, welche das Steuersignal des Interpreters 30 in eine haptisch erfassbare Information insbesondere Brailleschrift umsetzt. Er besteht aus einer Matrix von einzelnen Quadranten, welche nach Bedarf magnetisiert werden können, wodurch polarisierbare Flüssigkeiten stimuliert werden können. Je nach Grad der Polarisierung bilden polarisierbare Flüssigkeiten ertastbare Erhebungen aus.

Als polarisierbare Flüssigkeit können Flüssigkeiten eingesetzt werden die bspw. durch Mesophasen in mesomorphen Zustand versetzt werden oder elektrorheologische Flüssigkeit deren Fließverhalten durch ein elektrisches Feld schnell und reversibel gesteuert werden kann. Bespiele für so eine Flüssigkeit ist eine Suspension enthaltend ein Aluminiumsalz der Stearinsäure oder Polyurethanpartikeln, dispergiert in einem Silikonöl.

Das haptisch erfassbare Ausgabemittel 40 dient als Schnittstelle mit dem Benutzer. Dazu enthält es eine Schicht einer polarisierbaren Flüssigkeit. Durch die Magnetisierung einzelner Quadranten durch den Polarisierer 10 wird die polarisierende Flüssigkeit stimuliert und konzentriert sich gezielt in einem bestimmten Bereich. Diese Konzentration ist als Erhebung ertastbar. Dies ist geeignet um die Bild-Informationen insbesondere Schrift in Form von Braillezeichen darzustellen. Die Erhebungen haben in diesem Anwendungsfall eine Höhe von bevorzugt 0,3mm bis 0,9mm und eine räumlichen Ausdehnung von 6mm Länge und 4mm Breite, sie sind dabei an der Oberfläche des haptisch erfassbaren Ausgabemittels ertastbar. Die Schaltzeit beträgt dabei zwischen 30 ms und 50 ms.

Die Größe der tastbaren Braillezeichen beträgt üblicherweise 6 bis 7 mm, mit den Abmessungen: Punkt-Abstände 2,5 mm, Punkt-Stärke 1,5 mm (Durchmesser), Form-Abstand 6 mm, Zeilen-Abstand 10 mm, Punkthöhe (Erhebung) mindestens 0,4 mm (optimale Höhe 0,5 - 0,7 mm). Andere Abmessungen für die Anzeige anderer Zeichen sind möglich. Jede Erhebung kann durch ein Überstreifen der Oberfläche mit den Fingerkuppen vom Benutzer erfasst werden.

In einer zweiten Ausführungsform sind das haptisch erfassbare Ausgabemittel 40 und der Polarisierer 10 so zueinander angeordnet, dass das Ausgabemittel 40 auf einem Display 110 einer elektronischen Datenverarbeitungseinheit 100 angeordnet werden kann, während es gleichzeitig vom Polarisierer 10 beeinflusst wird. Dies wird beispielsweise erreicht indem das Ausgabemittel und der Polarisierer eine als Tasche zur Aufnahme eines Display 110 einer elektronischen Datenverarbeitungseinheit 100 eines ausgebildet sind.

Das ermöglicht es die Vorrichtung zur taktilen Anzeige 1 besonders kompakt zu gestalten und auch für mobile elektronische Datenverarbeitungseinheiten 100 zu verwenden.

In einer dritten Ausführungsform ist das haptisch erfassbare Ausgabemittel 40 als Folie ausgeführt. Das ermöglicht eine besonders leichte Bauweise. Es kann dabei in Form eines Brailleschrift-Folien-Moduls ausgebildet sein.

Die Folie besteht dabei beispielsweise aus Polyvinylchlorid oder Polyethylen. Die Dicke der Folie beträgt vorzugsweise 0,5 mm bis 1 mm.

Diese beiden Ausführungsformen können hierbei auch miteinander kombiniert werden.

Dazu kann das haptisch erfassbare Ausgabemittel 40, welches als Folie ausgebildet ist, in einer Weiterbildung dieser Ausführungsform, auch in Form einer Displayhülle ausgebildet sein. Hierbei ist es besonders vorteilhaft, wenn das haptisch erfassbare Ausgabemittel 40 transparent ausgebildet ist.

Die erfindungsgemäße Vorrichtung ermöglicht es das Brailleschriften direkt vor dem Display des Endgerätes dargestellt werden. Das erfindungsgemäße Vorrichtung stellt dabei ein System da, welches vorzugsweise aus verschiedenen Einzelmodulen zusammensetzbar ist: Interface-Modul (VGA, DVI, etc.), Interpreter-Modul und Brailleschrift-Folien-Modul. Hierbei werden die Bildinformationen über den Ausgangsport der elektronischen Datenverarbeitungseinheit (VGA, DVI, etc.) abgegriffen, durch einen nachgeschalteten Interpreter übersetzt und auf dem Braillschrift-Folien-Modul dargestellt. Im Gegensatz zur konventionellen Braillezeile können die Schriften direkt vor dem Display auf dem Brailleschrift-Folien-Modul erzeugt werden. Darüber hinaus bleibt die eigentliche Bedienoberfläche des Endgerätes uneingeschränkt nutzbar. Das ermöglicht wiederum eine interaktive Bedienung von Bildschirmtastaturen, Bedienflächen usw. und gewährleistet dadurch die individuelle Einsetzbarkeit des Endgerätes.

Mit Hilfe der erfindungsgemäßen Vorrichtung kann einerseits durch die Haptik die Brailleschrift dargestellt werden, andererseits sind die Bedienflächen (Bildschirmtasten und Bildschirmtastaturen usw.) auswählbar.

### Abbildungslegenden

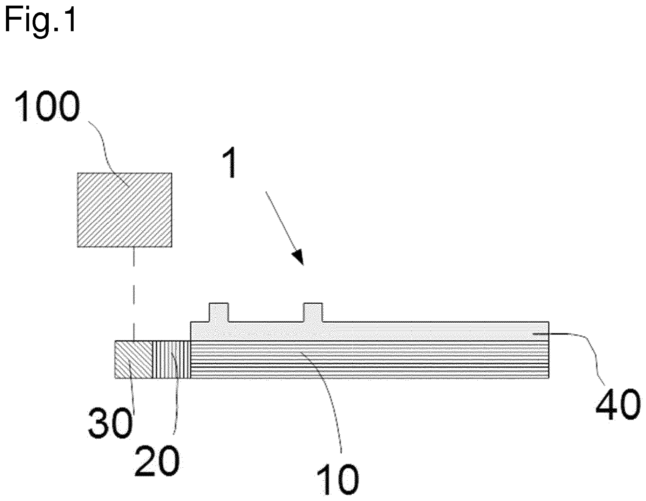

**Fig. 1** Darstellung der Vorrichtung zur taktilen Anzeige 1

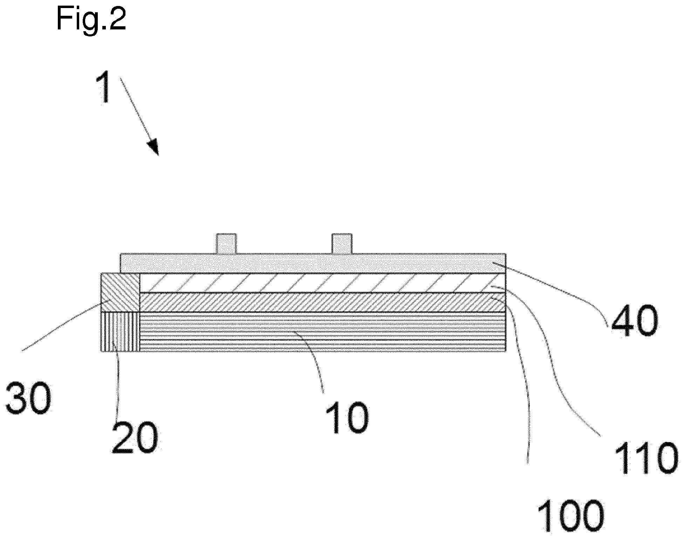

**Fig. 2** Darstellung der Vorrichtung zur taktilen Anzeige 1 mit einer als Folie haptisch erfassbare Ausgabemittel 40. In dieser Darstellung ist das Ausgabemittel 40 auf einem Display 110 einer elektronischen Datenverarbeitungseinheit 100 angeordnet.

### Bezugszeichen

- 1: Vorrichtung zur taktilen Anzeige
- 10: Polarisierer
- 20: Interpreter
- 30: Interface
- 40: Ausgabemittel
- 100: elektronische Datenverarbeitungseinheit
- 110: Display

## Patentansprüche

1. Vorrichtung zur taktilen Anzeige (1) zur Darstellung von Bildinformationen umfassend wenigstens je ein Interface (30), einen Interpreter (20), einen Polarisierer (10) und ein haptisch erfassbares Ausgabemittel (40), wobei das Interface (30) so ausgebildet ist, dass das Interface (30) einen Austausch von Bildinformationen mit einer elektronischen Datenverarbeitungseinheit ermöglicht und diese Bildinformationen an den Interpreter (20) weiterleiten kann, wobei der Interpreter (20) so ausgebildet ist, dass er die Bildinformationen des Interfaces (30) in ein Steuersignal zur Steuerung des Polarisierer (10) umwandeln kann, wobei der Polarisierer (10), dabei so ausgebildet ist, dass er zur Polarisierung einer polarisierbaren Flüssigkeit im haptisch erfassbaren Ausgabemittel (40) geeignet ist **dadurch gekennzeichnet, dass** das haptisch erfassbare Ausgabemittel (40) eine polarisierbare Flüssigkeit umfasst und so angeordnet ist, dass die polarisierbare Flüssigkeit durch den Polarisierer (10) in seiner Polarisierung beeinflusst werden kann, sodass in Abhängigkeit vom Grad der Polarisierung unterschiedlich hohe Erhebungen an der Oberfläche des haptisch erfassbaren Ausgabemittels (40) bestehen, welche von einem Benutzer ertastet werden können.

2. Vorrichtung zur taktilen Anzeige (1) gemäß Anspruch 1, **dadurch gekennzeichnet dass** das haptisch erfassbare Ausgabemittel (40) und der Polarisierer so zueinander angeordnet sind, dass das haptisch erfassbare Ausgabemittel (40) direkt über ein Display (110) elektronischen Datenverarbeitungseinheit (100) angeordnet werden kann.

3. Vorrichtung zur taktilen Anzeige (1) gemäß Anspruch 1, **dadurch gekennzeichnet dass** das haptisch erfassbare Ausgabemittel (40) als Folie ausgeführt ist.
